# EUROPÄISCHE PATENTSCHRIFT

(11) **EP 3 504 077 B1**
(45) Veröffentlichungstag und Bekanntmachung des Hinweises auf die Patenterteilung: **11.01.2023**
(21) Anmeldenummer: 17801005.4
(22) Anmeldetag: 23.08.2017
(51) Int. Cl.: B60K 1/00, B60K 1/04

(54) **ELEKTROFAHRZEUG MIT VORRICHTUNG ZUM ANORDNEN VON BATTERIEN**
ELECTRIC VEHICLE WITH DEVICE FOR ARRANGING BATTERIES
VÉHICULE ÉLECTRIQUE AVEC DISPOSITIF D'AGENCEMENT DES BATTERIES

(30) Priorität: 25.08.2016 DE 202016005333 U
(43) Veröffentlichungstag der Anmeldung: 03.07.2019
(73) Patentinhaber: Constin GmbH, 12159 Berlin (DE); Constien, Hans-Peter, 12159 Berlin (DE)
(72) Erfinder: CONSTIEN, Hans-Peter, 12159 Berlin (DE)
(74) Vertreter: Kayser, Christoph
(86) Internationale Anmeldenummer: PCT/DE2017/000270
(87) Internationale Veröffentlichungsnummer: WO 2018/036576

(56) Entgegenhaltungen:
- EP-A1- 0 986 830
- EP-A1- 1 452 124
- EP-A1- 1 925 513
- EP-A2- 1 396 401
- EP-A2- 1 621 838
- DE-A1- 2 558 456
- DE-A1-102010 056 381
- DE-A1-102011 111 537
- DE-U1-202014 010 022
- JP-A- H 048 628
- US-A- 5 760 569
- US-A1- 2009 314 557
- US-A1- 2014 178 719

## Beschreibung

Die Erfindung betrifft Elektrofahrzeug mit einer Karosserie (1), mit einer Vorrichtung zum Anordnen von Batterien, wobei die Batterien aus Batterieeinzelzellen bestehen, die in mindestens einer Schublade einzeln lösbar gehaltert und lösbar kontaktiert sind, , wobei die mindestens eine Schublade in der Karosserie zwischen einer herausgezogenen und einer eingeschobenen Position seitlich verschiebbar gelagert ist und die Batterieeinzelzellen Steckkontakte für Anschlusskontakte in der Schublade aufweisen, und mit einer Batteriemanagementelektronik.

Ein solches Elektrofahrzeug ist aus DE 20 2014 010022 U1 bekannt. In diesem ist eine Schublade angeordnet, die zu zwei Seiten aus der Karosserie des Elektrofahrzeugs herausgezogen werden kann. In der Schublade sind mehrere Batterien in einer Reihe angeordnet, so dass beim Herausziehen, der Schublade zu einer Seite, wenigstens ein Teil der Batterien von oben zugänglich werden. Außerhalb der Schublade ist eine Schalteinrichtung vorgesehen, an welche die Batterien angeschlossen sind.

Jede einzelne Batterie weist Steckkontakte auf, die in einem Betriebszustand über Anschlussklemmen der Schalteinrichtung mit der Schalteinrichtung verbunden sind. Vor dem Herausziehen der Schublade, müssen alle Anschlussklemmen von den Steckkontakten gelöst und von diesem wegbewegt werden. Beim Wechsel nur einer Batterie, sind auch alle weiteren Batterien somit abgeklemmt, so dass die gesamte Stromversorgung für das Elektrofahrzeug unterbrochen ist, obwohl das Elektrofahrzeug mit nur einer leistungsfähigen Batterie betriebsfähig ist.

Die Schalteinrichtung schaltet im Betriebszustand des Fahrzeugs bei Erreichen eines vorbestimmten niedrigen Leistungsniveaus einer Batterie um auf eine noch leistungsstarke Batterie um. Die Funktion der Schalteinrichtung beschränkt sich auf die Feststellung eines Spannungszustand und die Umschaltung auf eine andere Batterie, wenn ein für den Betrieb zu niedriger Spannungszustand erreicht wird. Die in einer Batterie mit zu niedrigem Spannungszustand vorhandene Restspannung kann nicht weiter genutzt werden.

Im Stand der Technik werden zudem weitere Vorrichtungen zum Batteriewechsel vorgeschlagen, die davon ausgehen, dass ein vergleichsweises großes Batteriegewicht bewegt werden muss. Die technischen Lösungen konzentrieren sich deshalb darauf, den Batteriewechsel maschinentechnisch zu bewältigen. Einen komplexen Überblick gibt die DE 20 2011 004 219 U1.

Mit der DE 10 2013 016 796 A1 wird eine Batterie vorgeschlagen, die aus prismatischen Batterieeinzelzellen besteht, die einzeln lösbar in einem Magazin gehaltert und lösbar kontaktiert sind, so dass zum Batteriewechsel lediglich die Batterieeinzelzellen ausgetauscht werden.

Aus US 2009/0314557 A1 ist ein Arbeitsfahrzeug, z.B. ein Bagger, bekannt, bei dem Batterien mit einer Mehrzahl von Batterieeinzelzellen hinten als Gegengewicht angeordnet sind. Zum Laden der Batterie wird diese komplett nach hinten aus dem Arbeitsfahrzeug herausgezogen und gegen eine neue geladene Batterie ersetzt. Ein Regler kontrolliert den Ladezustand, so dass ein Wechsel bei Erreichen eines Entladungszustandes durchgeführt werden kann.

Dies soll bei einer vorteilhaften Ausgestaltung über ein mechanisches Austauschsystem automatisch erfolgen. Im Weiteren wird darauf verwiesen, dass derartige Batterieeinzelzellen in Wechselstationen aufgeladen und bei idealen Betriebstemperaturen zum Austausch vorgehalten werden können.

Aufgabe der Erfindung ist es, Batterieeinzelzellen oder Module aus Batteriezellen optimal anzuordnen und ein leichtes Wechseln zu ermöglichen. Gelöst wird diese Aufgabe mit den Merkmalen des Anspruches 1. Vorteilhafte Ausgestaltungen sind Gegenstand der Unteransprüche.

Das erfindungsgemäße Elektrofahrzeug sieht vor, dass in der Schublade eine Batteriemanagementelektronik angeordnet ist.

Die Batteriemanagementelektronik erfüllt dabei die Aufgabe, die Spannungen der Batterieeinzelzellen oder Module durch Umladen anzupassen oder schaltet geeignete Batterieeinzelzellen oder Module zusammen. Durch deren Anordnung in der Schublade reduzieren sich die notwendigen Kabelverbindungen nach außerhalb der Schublade beträchtlich, im einfachsten Fall auf eine Datenleitung und die beiden Pole Plus und Minus.

Bei einer bevorzugten Ausführung sind die Steckkontakte der Batterieeinzelzellen oder Module bodenseitige oder bodenseitig seitlich an oder in den Batterieeinzelzellen oder Modulen angeordnet und die Anschlusskontakte befinden sich am Boden oder bodenseitig seitlich in der Schublade.

Die Verbindung der Batteriemanagementelektronik mit der Leistungselektronik ist bevorzugt über ein oder mehrere Kabel geführt, die in Kabelrollen oder flexiblen Kabelführungen angeordnet sind und/oder über Steckkontakte.

Das als Schublade ausgebildete Magazin ist bei einer bevorzugten Ausführung rollengelagert oder mittels Teleskopschienen, vorzugsweise kugelgelagert, an Karosserieteilen beim Ein- und Ausschub geführt und gelagert.

Die Karosserieteile bilden bevorzugt ein Schubladenaufnahmefach, so dass die Teleskopschienen an den Seitenwänden des Schubladenaufnahmefaches und der Schublade angeordnet sind.

Eine weitere vorteilhafte Ausgestaltung sieht vor, dass ein Schubladenaufnahmefach durch einen Quer- oder Längsträger der Karosserie gebildet ist.

Als vorteilhaft hat sich weiter erwiesen, wenn die Karosserie Ausheber und/oder Andrücker für die Batterieeinzelzellen oder Module aufweist, die beim Ausschub der Schublade die Batterieeinzelzellen oder Module von den Anschlusskontakten der Schublade lösen und beim Einschub auf die Anschlusskontakte drücken zur Herstellung einer sicheren Verbindung zwischen den Steckkontakten und den Anschlusskontakten. Das erleichtert das Herausnehmen der Batterieeinzelzellen oder Module per Hand, wofür die Batterieeinzelzellen oder Module oben über einen Handgriff verfügen, beträchtlich und sorgt für eine hohe Sicherheit beim Einsetzen neuer Batterieeinzelzellen oder Module.

Eine weitere Ausgestaltung sieht vor, dass die Schublade über mindestens einen Anschluss zum Einbringen von einem Kühlmedium in die Schublade und/oder zu Kühlanschlüssen der Batterieeinzelzellen oder Module verfügt.

Vorteilhafte Ausgestaltung bestehen weiter darin,
dass die Schublade über eine höhenveränderbare Abstützung verfügt, mit der die Schublade im herausgeschobenen Zustand auf dem Boden abstützbar ist.
dass die Schublade im eingeschobenen Zustand feststellbar ist und
dass die Schublade durch einen Antrieb herein- und herausschiebbar ist.

Eine weitere vorteilhafte Ausgestaltung sieht ferner vor, dass die Batterieeinzelzellen oder die Module seitlich Führungen aufweisen, die mit Führungen der Wände der Schublade korrespondieren oder untereinander zwischen den Batterieeinzelzellen oder Modulen jeweils zur Bildung von Formschluss.

Vorteilhaft ist es weiter, wenn die Batterieeinzelzellen oder die Module über eine Ladeanzeige verfügen, die bei herausgezogener Schublade sichtbar ist. So sind die zu wechselnden Batterieeinzelzellen oder Module leicht erkennbar.

Weiter sollte die Schublade oder das Schubladenaufnahmefach durch eine Klappe der Karosserie, die im geschlossenen Zustand mit der Außenfläche der Karosserie fluchtet, abdeckbar sein. Das Karosseriedesign wird so fortgesetzt.

Die Erfindung soll anhand der Zeichnungen erläutert werden. Es zeigen:
- Fig. 1: eine seitlich in der Karosserie angeordnete Schublade und
- Fig. 2: ein Modul aus mehreren Batterieeinzelzellen.

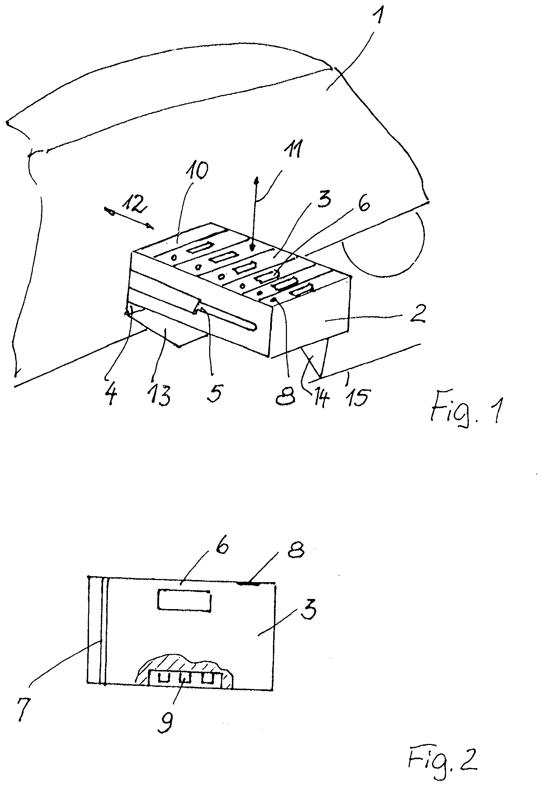

**FIG. 1** zeigt ein Magazin für Module 3 aus Batterieeinzel- zellen, das seitlich in der Karosserie 1 in Form einer Schublade 2 angeordnet ist. Die Schublade 2 ist aus der Karosserie 1 herausgezogen bis zu einem Anschlag, so dass die in der Schublade 2 angeordneten Module 3 sichtbar und nach oben in Pfeilrichtung 11 herausnehmbar sind zum Tausch gegen neue, aufgeladene Module 3.

Die Module 3 verfügen über Steckkontakte 9 für Anschlusskontakte in der Schublade 2, wobei die Anschlusskontakte mit einer Batteriemanagementelektronik 10 in der Schublade 2 verbunden sind. Die Batteriemanagement- elektronik 10 ist ihrerseits mit der Leistungselektronik zum Fahrzeugbetrieb verbindbar oder verbunden.

Diese Verbindung mit der Leistungselektronik erfolgt über eine oder mehrere Kabel, die in Kabelrollen oder flexiblen Kabelführungen angeordnet sind und/oder über Steckkontakte.

Im Schubladenaufnahmefach 4 der Karosserie 1 ist die Schublade 2 seitlich geführt und gelagert an Teleskopschienen 5 und kann so herein- und herausgezogen werden.

Die Teleskopschienen 5 sind seitlich an den Wänden des Schubaufnahmefaches 4 und des Schubfaches 2 angeordnet.

Im eingeschobenen Zustand der Schublade 2 ist das Schubladenaufnahmefach 4 durch eine Klappe 10 verschließbar, die mit der Außenfläche der Karosserie 1 fluchtet. Weiter ist in diesem Zustand die Schublade 2 im Schubladenaufnahmefach 4 fixierbar.

Die Module 3 verfügen über eine Ladeanzeige 8, die bei herausgezogener Schublade 2 sichtbar ist.

Zum Wechseln der Module 3 wird die Klappe 10 des Schubladenaufnahmefaches 4 geöffnet, das Schubfach 2 gelöst und bis zu einem nicht dargestellten Anschlag herausgezogen. Dies kann per Hand oder auch durch einen Antrieb vollzogen werden. Im herausgezogenen Zustand sorgt eine Abstützung 14 dafür, dass nicht die ganze Last der Schublade 2 und das durch das Herausziehen wirkende Moment durch die Teleskopschienen 5 aufgenommen werden muss.

Bevorzugt ist die Abstützung 14 höhenverstellbar, so dass eine Anpassung an den Boden 15 realisierbar ist.

Über die an jedem Modul 3 angeordnete Ladeanzeige 8 erfolgt eine Information über den Ladezustand. Ist dieser unzureichend, wird das jeweilige Modul 3 am oben befindlichen Handgriff 6 nach oben in Richtung des Pfeils 11 entnommen. Dabei lösen sich die Steckkontakte 9 des jeweiligen Moduls 3 von den Anschlusskontakten am Boden der Schublade 2.

Anstelle des herausgezogenen Moduls 3 lässt sich ein neuer Modul 3 in die Schublade 2 einsetzen. Bei einem Modulgewicht von unter 10 kg ist dies problemlos durch jeden Kraftfahrer(in) händelbar.

Die hergestellte Kontaktverbindung ist optisch daran zu erkennen, dass die Module 3 oben glatt miteinander abschließen. Natürlich kann auch noch eine Anzeige diesen Zustand anzeigen.

Nicht dargestellt, aber vorteilhaft ist es, wenn die Karosserie Ausheber und Andrücker für die Module 3 aufweist, die beim Ausschub der Schublade 2 die Module 3 bereits von den Anschlusskontakten der Schublade lösen und beim Einschub auf die Anschlusskontakte drücken zur Herstellung einer sicheren Verbindung zwischen den Steckkontakten 9 und den Anschlusskontakten. Das erleichtert das Herausnehmen der Module 3 per Hand weiter und sorgt für eine hohe Sicherheit beim Einsetzen neuer Module 3.

Wie dargestellt, sind die Module 3 in der Schublade 2 kompakt angeordnet und füllen die Schublade 2 bis auf den Platz für die Batteriemanagementelektronik 10 aus.

Bevorzugt sind die Module 3 außen quaderförmig.

Die exakte Anordnung der Module 3 auch im Hinblick auf die Herstellung der Kontaktverbindungen kann dadurch unterstützt werden, dass die Module 3 und/oder die Seitenwände des Schubfaches 2 Führungen 7 zur Herstellung von Formschluss aufweisen.

In **Fig. 2** ist beispielhaft ein am Markt befindliches Modul 3 von Batterieeinzelzellen dargestellt. Dieser hat ein Außenmaß von 217 × 368 **×** 88 mm, eine im Wesentlichen quaderförmige Form und enthält die Batteriezellen. Die Leistung eines Moduls 3 beträgt 1400 Wh bei einer Nennspannung von 48 V.

Das Modul verfügt über einen Handgriff 6 zum Transport und eine Ladeanzeige 8.

Die Steckkontakte 9 sind bodenseitig seitlich angeordnet. Sie sind seitlich verdeckt und schmutz- und wassergeschützt.

Die Führungen 7 dienen der exakten Positionierung der Module 3 in der Schublade 2 durch Formschluss untereinander und/oder mit den Wänden der Schublade 2.

### Bezugszeichenliste

- 1: Karosserie
- 2: Schublade
- 3: Modul von Batterieeinzelzellen
- 4: Schubladenaufnahmefach
- 5: Teleskopschienen
- 6: Handgriff
- 7: Führungen der Module
- 8: Ladeanzeige
- 9: Steckkontakte
- 10: Batteriemanagementelektronik
- 11: Modulwechselrichtung
- 12: Bewegung der Schublade
- 13: Klappe
- 14: Abstützung
- 15: Boden

## Patentansprüche

1. Elektrofahrzeug mit einer Karosserie (1), mit einer Vorrichtung zum Anordnen von Batterien, wobei die Batterien aus Batterieeinzelzellen bestehen, die in mindestens einer Schublade (2) einzeln lösbar gehaltert und lösbar kontaktiert sind, , wobei die mindestens eine Schublade (2) in der Karosserie (1) zwischen einer herausgezogenen und einer eingeschobenen Position seitlich verschiebbar gelagert ist und die Batterieeinzelzellen Steckkontakte (9) für Anschlusskontakte in der Schublade (2) aufweisen, und mit einer Batteriemanagementelektronik (10) **dadurch gekennzeichnet, dass**
die Batteriemanagementelektronik (10) in der Schublade (2) angeordnet ist und die mindestens eine Schublade (2) bis zu einem Anschlag herausziehbar ist, derart, dass in der herausgezogenen Position alle Batterieeinzelzellen einzeln nach oben aus der mindestens einen Schublade (2) entnehmbar sind wobei die Anschlusskontakte in der Schublade (2) angeordnet sind und mit der Batteriemanagementelektronik (10) in der Schublade (2) verbunden sind und die Batteriemanagementelektronik (10) mit einer Leistungselektronik zum Fahrzeugbetrieb verbindbar oder verbunden ist, und wobei die Batteriemanagementelektronik (10) die in der Schublade (2) angeordneten Batteriezellen zusammenschaltet oder Spannungen der in der Schublade (2) angeordneten Batteriezellen durch Umladen anpasst.

2. Elektrofahrzeug nach Anspruch 1,
**dadurch gekennzeichnet,**
**dass** die Batterieeinzelzellen Steckkontakte (9) bodenseitig aufweisen, die mit bodenseitig in der Schublade (2) angeordneten Anschlusskontakten zusammenwirken können.

3. Elektrofahrzeug nach Anspruch 1,
**dadurch gekennzeichnet**,
**dadurch gekennzeichnet,**
**dass** die Batterieeinzelzellen Steckkontakte (9) bodenseitig seitlich aufweisen, die mit bodenseitig seitlich in der Schublade (2) angeordneten Anschlusskontakten zusammenwirken können.

4. Elektrofahrzeug nach Anspruch 3,
**dadurch gekennzeichnet,**
**dass** die Batteriezellen zu Modulen (3) zusammengefasst sind und die Module (3) Steckkontakte (9) bodenseitig aufweisen, die mit bodenseitig in der Schublade (2) angeordneten Anschlusskontakten zusammenwirken können.

5. Elektrofahrzeug nach Anspruch 4,
**dadurch gekennzeichnet,**
**dass** die Module (3) Steckkontakte (9) bodenseitig seitlich aufweisen, die mit bodenseitig seitlich in der Schublade (2) angeordneten Anschlusskontakten zusammenwirken können.

6. Elektrofahrzeug nach einem der vorstehenden Ansprüche,
**dadurch gekennzeichnet,**
**dass** in der Karosserie (1) ein Schubladenaufnahmefach (4) für die Schublade (2) ausgebildet ist.

7. Elektrofahrzeug nach einem der Ansprüche 1 bis 3,
**dadurch gekennzeichnet,**
**dass** die Karosserie (1) Ausheber und/oder Andrücker für die Batterieeinzelzellen aufweist, wobei die Ausheber und/oder Andrücker die Batterieeinzelzellen beim Herausziehen von den Anschlusskontakten der Schublade (2) lösen und die Batterieeinzelzellen beim Hineinschieben auf die Anschlusskontakte drücken.

8. Elektrofahrzeug nach Anspruch 4 oder 5,
**dadurch gekennzeichnet,**
**dass** die Karosserie (1) Ausheber und/oder Andrücker für die Module (3) aufweist, wobei die Ausheber und/oder Andrücker die Module beim Herausziehen von den Anschlusskontakten der Schublade (2) lösen und die Module beim Hineinschieben auf die Anschlusskontakte drücken.

9. Elektrofahrzeug nach einem der vorstehenden Ansprüche,
**dadurch gekennzeichnet,**
**dass** die Schublade (2) wenigstens einen Anschluss zum Einbringen eines Kühlmediums in die Schublade (2) aufweist.

10. Elektrofahrzeug nach einem der vorstehenden Ansprüche,
**dadurch gekennzeichnet,**
**dass** ein Antrieb vorgesehen ist, mit welchem die Schublade (2) herein- und herausschiebbar ist.

11. Elektrofahrzeug nach einem der vorstehenden Ansprüche,
**dadurch gekennzeichnet,**
**dass** die Schublade () eine höhenveränderbare Abstützung (14) aufweist.

12. Elektrofahrzeug nach einem der Ansprüche 1 bis 3, 6, 7 und 9 bis 11,
**dadurch gekennzeichnet,**
**dass** die Batterieeinzelzelle über eine Ladeanzeige verfügt, die bei herausgezogener Schublade (2) sichtbar ist.

13. Elektrofahrzeug nach Anspruch 4, 5 oder 8,
**dadurch gekennzeichnet,**
**dass** das Modul (3) über eine Ladeanzeige verfügt, die bei herausgezogener Schublade (2) sichtbar ist.

14. Elektrofahrzeug nach einem der Ansprüche 7 bis 12,
**dadurch gekennzeichnet,**
**dass** die Karosserie (1) eine Klappe (13) aufweist, welche im geschlossenen Zustand das Schubladenaufnahmefach (4) abdeckt und mit einer Außenfläche der Karosserie (1) fluchtet.

## Claims

1. An electric vehicle having: a body (1); a device for arranging batteries, the batteries consisting of individual battery cells which are individually detachably retained and detachably contacted in at least one drawer (2), the at least one drawer (2) being mounted in the body (1) so as to be laterally displaceable between a pulled-out and a pushed-in position, and the individual battery cells having plug contacts (9) for connection contacts in the drawer (2); and battery management electronics (10),
**characterised in that**
the battery management electronics (10) are arranged in the drawer (2), and the at least one drawer (2) can be pulled out as far as a stop such that, in the pulled-out position, all the individual battery cells can be removed upwards individually from the at least one drawer (2), wherein the connection contacts are arranged in the drawer (2) and are connected to the battery management electronics (10) in the drawer (2), and the battery management electronics (10) can be or are connected to power electronics for vehicle operation, and wherein the battery management electronics (10) connect the battery cells arranged in the drawer (2) together or adjusts voltages of the battery cells arranged in the drawer (2) by transferring charge.

2. The electric vehicle according to Claim 1,
**characterised in that**
the individual battery cells have plug contacts (9) on the bottom, which can interact with connection contacts arranged on the bottom in the drawer (2).

3. The electric vehicle according to Claim 1,
**characterised in that**
the individual battery cells have plug contacts (9) laterally on the bottom, which can interact with connection contacts arranged laterally on the bottom in the drawer (2).

4. The electric vehicle according to Claim 3,
**characterised in that**
the battery cells are grouped to form modules (3), and the modules (3) have plug contacts (9) on the bottom, which can interact with connection contacts arranged on the bottom in the drawer (2).

5. The electric vehicle according to Claim 4,
**characterised in that**
the modules (3) have plug contacts (9) laterally on the bottom, which can interact with connection contacts arranged laterally on the bottom in the drawer (2).

6. The electric vehicle according to any one of the preceding claims,
**characterised in that**
a drawer-receiving compartment (4) for the drawer (2) is formed in the body (1).

7. The electric vehicle according to any one of Claims 1 to 3,
**characterised in that**
the body (1) has ejectors and/or pressers for the individual battery cells, wherein the ejectors and/or pressers detach the individual battery cells from the connection contacts of the drawer (2) when it is pulled out and press the individual battery cells onto the connection contacts when the drawer is pushed in.

8. The electric vehicle according to Claim 4 or 5,
**characterised in that**
the body (1) has ejectors and/or pressers for the modules (3), wherein the ejectors and/or pressers detach the modules from the connection contacts of the drawer (2) when it is pulled out and press the modules onto the connection contacts when the drawer is pushed in.

9. The electric vehicle according to any one of the preceding claims,
**characterised in that**
the drawer (2) has at least one connection for introducing a cooling medium into the drawer (2).

10. The electric vehicle according to any one of the preceding claims,
**characterised in that**
a drive is provided with which the drawer (2) can be pushed in and out.

11. The electric vehicle according to any one of the preceding claims,
**characterised in that**
the drawer () has a height-variable support (14).

12. The electric vehicle according to any one of Claims 1 to 3, 6, 7 and 9 to 11,
**characterised in that**
the individual battery cell has a charge display, which is visible when the drawer (2) is pulled out.

13. The electric vehicle according to Claim 4, 5 or 8,
**characterised in that**
the module (3) has a charge display, which is visible when the drawer (2) is pulled out.

14. The electric vehicle according to any one of Claims 7 to 12,
**characterised in that**
the body (1) has a hatch (13), which covers the drawer-receiving compartment (4) and is flush with an outer surface of the body (1) when in the closed state.

## Revendications

1. Véhicule électrique comportant une carrosserie (1), avec un dispositif pour disposer des batteries, dans lequel les batteries sont constituées de cellules de batterie individuelles qui sont maintenues individuellement de manière amovible dans au moins un tiroir (2) et mises en contact de manière amovible, dans lequel le au moins un tiroir (2) dans la carrosserie (1) est monté de manière à pouvoir être déplacé latéralement entre une position déployée et une position enfoncée et les éléments de batterie individuels présentent des contacts à fiche (9) pour les contacts de connexion dans le tiroir (2), et comportant une électronique de gestion de batterie (10), **caractérisé en ce que** l'électronique de gestion de batterie (10) est agencée dans le tiroir (2) et le au moins un tiroir (2) peut être retiré jusqu'à une butée, de telle sorte que dans la position déployée toutes les cellules de batterie individuelles peuvent être retirées individuellement vers le haut du au moins un tiroir (2), dans lequel les contacts de connexion sont disposés dans le tiroir (2) et connectés à l'électronique de gestion de batterie (10) dans le tiroir (2) et l'électronique de gestion de batterie (10) est connectable ou connectée avec une électronique de puissance pour le fonctionnement du véhicule, et dans lequel l'électronique de gestion de batterie (10) interconnecte des cellules de batterie disposées dans le tiroir (2) ou ajuste par recharge des tension des cellules de batterie disposées dans le tiroir (2).

2. Véhicule électrique selon la revendication 1, **caractérisé en ce que** les éléments de batterie individuels présentent sur le côté inférieur des contacts enfichables (9), qui peuvent interagir avec les contacts de connexion disposés sur le côté inférieur dans le tiroir (2).

3. Véhicule électrique selon la revendication 1, **caractérisé en ce que** les éléments de batterie individuels présentent sur le côté inférieur des contacts enfichables (9), qui peuvent interagir avec des contacts de connexion disposés latéralement sur le côté inférieur dans le tiroir (2).

4. Véhicule électrique selon la revendication 3, **caractérisé en ce que** les cellules de batterie sont regroupées en modules (3) et les modules (3) présentent des contacts de fiche (9) sur le côté inférieur, qui peuvent interagir avec les contacts de connexion disposés sur le côté inférieur dans le tiroir (2).

5. Véhicule électrique selon la revendication 4, **caractérisé en ce que** les modules (3) présentent sur le côté inférieur des contacts enfichables (9) qui peuvent interagir avec des contacts de connexion disposés latéralement sur le côté inférieur dans le tiroir (2).

6. Véhicule électrique selon une quelconque des revendications précédentes, **caractérisé en ce que** dans la carrosserie (1) un compartiment de réception de tiroir (4) pour le tiroir (2) est réalisé.

7. Véhicule électrique selon une des revendications 1 à 3, **caractérisé en ce que** la carrosserie (1) présente des éjecteurs et/ou des presseurs pour les éléments de batterie individuels, dans lequel les éjecteurs et/ou les presseurs libèrent les cellules de batterie individuelles des contacts de connexion du tiroir (2) lorsqu'ils sont retirés et pressent les cellules de batterie individuelles sur les contacts de connexion lorsqu'elles sont enfoncées

8. Véhicule électrique selon la revendication 4 ou 5, **caractérisé en ce que** la carrosserie (1) présente des éjecteurs et/ou des presseurs pour les modules (3), dans lequel les éjecteurs et/ou les presseurs libèrent les différents éléments de batterie des contacts de connexion du tiroir (2) lorsqu'ils sont retirés et pressent les modules sur les contacts de connexion lorsqu'elles sont enfoncées.

9. Véhicule électrique selon une quelconque des revendications précédentes, **caractérisé en ce que** le tiroir (2) comporte au moins un raccord pour introduire un fluide de refroidissement dans le tiroir (2) .

10. Véhicule électrique selon une des précédentes, revendications **caractérisé en ce qu'**un entraînement est prévu, avec lequel le tiroir (2) peut être rentré et sorti.

11. Véhicule électrique selon une des revendications précédentes, **caractérisé en ce que** le tiroir () présente un appui (14) réglable en hauteur.

12. Véhicule électrique selon une des revendications 1 à 3, 6, 7 et 9 à 11, **caractérisé en ce que** la cellule de batterie individuelle dispose d'un indicateur de charge, qui est visible lorsque le tiroir (2) est tiré.

13. Véhicule électrique selon la revendication 4, 5 ou 8, **caractérisé en ce que** le module (3) dispose d'un indicateur de charge, qui est visible lorsque le tiroir (2) est tiré.

14. Véhicule électrique selon une quelconque des revendications 7 à 12, **caractérisé en ce que** la carrosserie (1) présente un volet (13) qui recouvre le compartiment de réception du tiroir (4) à l'état fermé et est aligné avec une surface extérieure de la carrosserie (1).
